# EUROPEAN PATENT SPECIFICATION

(11) **EP 2 819 110 B1**
(45) Date of publication and mention of the grant of the patent: **31.03.2021**
(21) Application number: 14170785.1
(22) Date of filing: 02.06.2014
(51) Int. Cl.: G08B 25/10, G01C 21/34

(54) **Condition monitoring and security system**
Zustandsüberwachungs und Sicherheitssystem
Système de surveillance et de sécurité

(30) Priority: 03.06.2013 JP 2013117193
(43) Date of publication of application: 31.12.2014
(73) Proprietor: DENSO CORPORATION, Kariya-city, Aichi-pref. 448-8661 (JP)
(72) Inventor: INAGAKI, Tokuya, Kariya-city, Aichi-pref. 448-8661 (JP)
(74) Representative: Winter, Brandl - Partnerschaft mbB

(56) References cited:
- XU CHEN: "Fast Patrol Route Planning in Dynamic Environments", IEEE TRANSACTIONS ON SYSTEMS, MAN AND CYBERNETICS. PART A:SYSTEMS AND HUMANS, IEEE SERVICE CENTER, PISCATAWAY, NJ, US, vol. 42, no. 4, 31 July 2012 (2012-07-31), - 31 July 2012 (2012-07-31), pages 894-904, XP011447222, ISSN: 1083-4427, DOI: 10.1109/TSMCA.2012.2183361

## Description

This application is based on and claims the benefit of priority from earlier Japanese Patent Application No. 2013-117193 filed June 3, 2013, the description of which is incorporated herein by reference.

The present invention relates to a condition monitoring apparatus that monitors conditions of a monitoring target, and relates to a security system, a program and a condition monitoring method.

A security system that monitors the occurrence of abnormality in a monitoring target is well known (see patent document JP-B-3666400). The security system described in the patent document JP-B-3666400 includes a home security terminal, an in-vehicle device mounted in a vehicle and a central server.

The home security terminal detects the occurrence of abnormality in a residential house where the home security terminal is set up. The in-vehicle device detects the occurrence of abnormality in a vehicle in which the in-vehicle device is mounted. The central server, when it receives a signal from the home security terminal indicating the occurrence of abnormality in the residential house, or when it receives a signal from the in-vehicle device indicating the occurrence of abnormality in the vehicle, communicates with a cell-phone terminal carried by the owner of the residential house or the vehicle to inform the owner of the occurrence of abnormality in the monitoring target.

In the security system described in the patent document JP-B-3666400, there is a possibility that some of the residential houses are not provided with the home security terminal. This raises a problem that the occurrence of abnormality cannot be monitored for such residential houses where the home security terminal is not set up.

A method that may solve this problem is to use an in-vehicle device mounted to a vehicle to monitor the occurrence of abnormality not only in the vehicle but also in an area where such residential houses with no home security terminal are present (hereinafter this area is referred to as "monitoring area").

However, this method raises a problem that, if there is not a single vehicle equipped with the in-vehicle device in the monitoring area, the presence/absence of abnormality in the monitoring area cannot be determined.

In other words, the system based on conventional art raises a problem of disabling monitoring of the occurrence of abnormality in a monitoring target that is not provided with a terminal.

It is noted that XU CHEN: "Fast Patrol Route Planning in Dynamic Environments", IEEE TRANSACTIONS ON SYSTEMS, MAN AND CYBERNETICS, PART A: SYSTEMS AND HUMANS, IEEE SERVICE CENTER, PISCATAWAY, NJ, US vol. 42, no. 4, 31 July 2012 (2012-07-31), -31 July 2012 (2012-07-31) pages 894-904, XP011447222, ISSN: 1083-4427, D0I: 10.1109/TSMCA.2012.2183361, relates to real-time patrol route planning in dynamic environments.

A security system according to the invention addressing the above problems is defined in claim 1. Advantageous further developments of the invention are set out in the accompanying dependent claims.

An embodiment of the security system enables detection as to whether or not abnormality has occurred in a monitoring target which is not provided with a terminal.

As an aspect of the embodiment, a security system comprises a central terminal, a positioning unit, at least one security terminal, and at least one mobile terminal. The central terminal comprises a communication unit, a storage device, and a control unit. The at least one security terminal has a communication unit, an information collection unit, a positioning unit which generates position information where the security terminal is set up and information that indicates the range of a monitoring area, and a detection unit which detects dangerous conditions of the monitoring area, the monitoring area delimiting a peripheral area around a residential property, wherein the information collection unit collects information that indicates the conditions of the monitoring area. The at least one mobile terminal is installed in a mobile object having a detection unit which collects information that indicates the conditions of the mobile object; a route control means which sets a set route that the mobile object is going to travel, the route control means being adapted to guide the mobile object to a destination according to the set route; a communication unit which transmits a specified current position and set route information indicating the set route set by the route control means to the central terminal; a peripheral information collection unit which collects information indicating the conditions of the corresponding mobile object and the peripheral area of the mobile object; and a control unit which confirms the occurrence of an abnormality by determining whether or not the mobile object is in an abnormal state based on the information on results of monitoring acquired by the peripheral information collection unit. The central terminal is adapted to determine the presence/absence of one or more monitoring-required areas, which are areas having a higher need of being monitored, on the basis of the position of the security terminals and the positional relationship of the corresponding monitoring areas. If the number of security terminals in a monitoring region is less than a reference number, the corresponding monitoring areas in the monitoring region are set as monitoring-required areas by the control unit of the central terminal. The control unit of the central terminal is further adapted to determine whether the set route of a mobile terminal passes through the monitoring-required areas, wherein if the set route does not pass through any one of the monitoring-required areas, the control unit of the central terminal is adapted to determine whether a change route, for which the change is equal to or smaller than a threshold, is possible, so that according to the changed route the mobile object moves from the current position to the destination passing through the monitoring-required areas, and, if the change route is possible, the control unit of the central terminal is adapted to prepare and transmit a route change request to the mobile terminal for guiding the corresponding mobile object to the destination according to the changed route. The control unit of the mobile terminal is adapted to acquire the changed route received by the communication unit of the mobile terminal, which was transmitted by the communication unit of the central terminal, and to control the route control means which sets the changed route as the set route when the changed route is acquired.

In the accompanying drawings:
Fig. 1 is a schematic block diagram illustrating a security system to which the present invention is applied;
Fig. 2 is a diagram illustrating installation sites of terminals that configure the security system;
Fig. 3 is a schematic block diagram illustrating a security terminal in the security system;
Fig. 4 is a schematic block diagram illustrating a mobile terminal in the security system;
Fig. 5 is a flow diagram illustrating a security terminal process performed by the security terminal;
Fig. 6 is a flow diagram illustrating a mobile terminal process performed by the mobile terminal;
Fig. 7 is a flow diagram illustrating a central process performed by a central terminal in the security system;
Fig. 8 is an explanatory diagram illustrating an example of operation of the security system;
Fig. 9 is a diagram illustrating installation sites of terminals, according to a modification of the security system; and
Fig. 10 is a schematic diagram illustrating an auxiliary security terminal that configures the modification of the security system.

With reference to the accompanying drawings, hereinafter is described an embodiment of the present invention.

### <Security system>

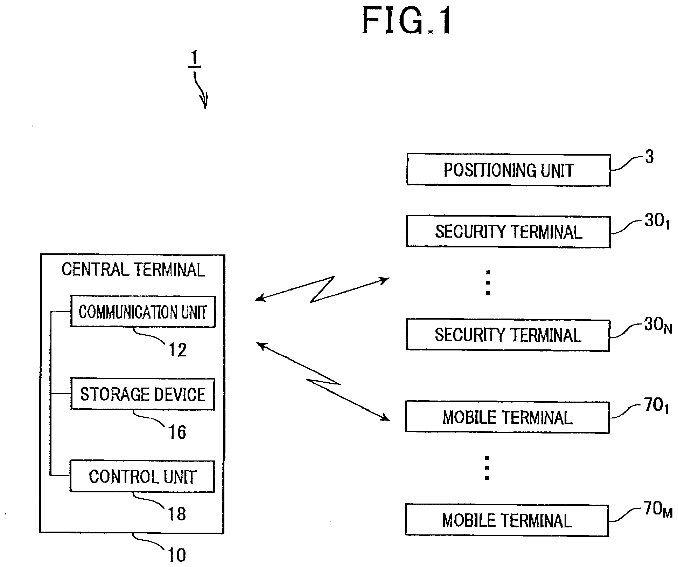

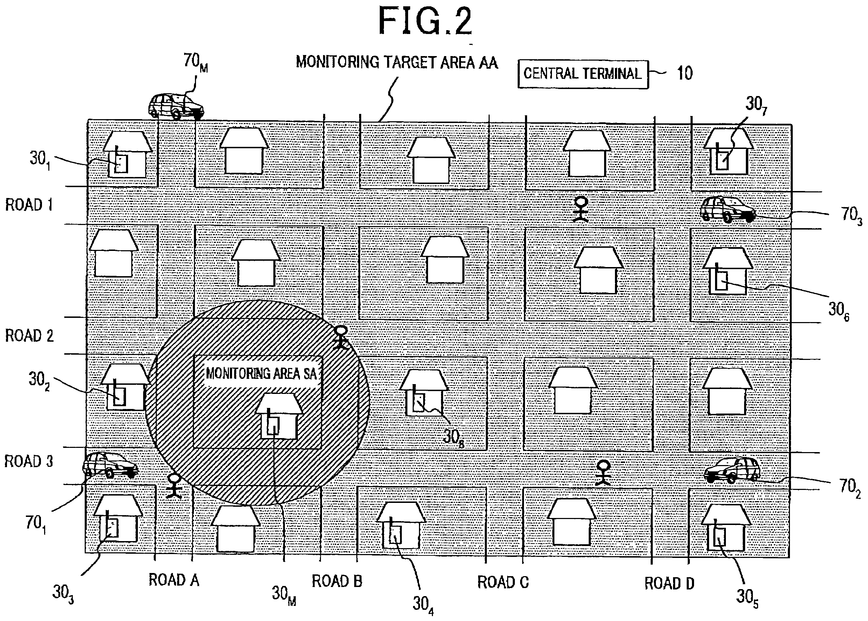

Fig. 1 illustrates a security system 1 to which the present invention is applied, according to the present embodiment. The security system 1 shown in Fig. 1 monitors whether or not abnormality has occurred in a monitoring target that is present in a monitoring target area AA (see Fig. 2) where the security system 1 is set up. For example, the monitoring target area AA may be set to a unit of an administrative district, such as a city, town or a village, or set to a unit of a city block, town block or village block which is smaller than the city, town or a village. The security system 1 of the present embodiment is set up for each monitoring target area AA.

The security system 1 includes at least one positioning unit 3, N number of security terminals 30, M number of mobile terminals 70 and at least one central terminal 10. Reference symbols N and M in the present embodiment are an integer of 1 or more.

The positioning unit 3 transmits or receives several signals required for specifying the positions where the security terminals 30 and the mobile terminals 70 are located. For example, the positioning unit 3 corresponds to a GPS (global positioning system) satellite, a base station of cell-phones or the like.

Each of the security terminals 30 and mobile terminals 70 monitors whether abnormality has occurred in a monitoring target.

Fig. 2 illustrates installation sites of the security terminals 30 and the mobile terminals 70 that configure the security system 1. As shown in Fig. 2, the security terminals 30 are set up in respective residential houses. Each security terminal 30 monitors the residential house where it is set up and an area including the residential house (hereinafter, this area is referred to as "monitoring area SA" which is an example of the second target) as a monitoring target. The security terminal 30 collects information indicating the conditions of the corresponding residential house and the corresponding monitoring area SA (hereinafter, this information is referred to as "target monitoring information"). Further, each security terminal 30 determines the presence/absence of abnormality in the corresponding monitoring target on the basis of the collected target monitoring information.

The monitoring area SA refers to an area that includes the peripheral area of the residential house as a monitoring target. For example, the monitoring area SA includes the premises of a residential house, a path leading to the premises of the residential house, or a street running along residential houses.

The abnormality in the present embodiment refers to an abnormal situation that is different from normal conditions. Further, abnormality in a residential house or the monitoring area SA refers to a perilous situation, such as gas leakage or fire in the residential house, forcible entry into the residential house (monitoring area SA), burglary or the like.

Each mobile terminal 70 is installed in a mobile object. The mobile terminal 70 monitors, as a monitoring target, the mobile object in which it is installed and the peripheral area of the mobile object (i.e. an example of the first target). The mobile terminal 70 collects information indicating the conditions of the corresponding mobile object and the peripheral area of the mobile object (hereinafter, this information is referred to as "peripheral information"). Further, the mobile terminal 70 determines the presence/absence of abnormality in the corresponding monitoring target on the basis of the collected peripheral information.

In the present embodiment, the mobile object is a vehicle. Abnormality in the mobile terminal 70 refers to an abnormal situation different from normal conditions. For example, the abnormality includes a perilous situation, such as approaching of a suspicious individual, destruction of the mobile object, or theft of the mobile object.

As shown in Fig. 1, the central terminal 10 includes a communication unit 12, a storage device 16 and a control unit 18.

The communication unit 12 performs communication with the security terminals 30 or the mobile terminals 70 to transmit or receive information. The control unit 18 is chiefly configured by a known microcomputer that includes ROM, RAM and CPU to control the unit 12 and the device 16 configuring the central terminal 10. The storage device 16 is a nonvolatile storage device configured in a readable/writable manner.

The storage device 16 stores several programs that will be executed by the control unit 18. The various programs include a program for the control unit 18 to perform a central process for confirming the presence/absence of an area having a higher need of being monitored (hereinafter, this area is referred to as "monitoring-required area") in the monitoring target area AA (see Fig. 2). The presence/absence of such a monitoring-required area is confirmed on the basis of the results of the communication with the security terminals 30 and the mobile terminals 70. In the central process, the control unit 18 outputs a command to one or more mobile terminals 70 so as to further confirm the presence/absence of abnormality in the monitoring-required area.

The size of the monitoring-required area may be approximately the same as, or may be larger than that of the monitoring area SA. For example, the monitoring-required area may be an area having a uniform width extending along a road.

### <Security terminal>

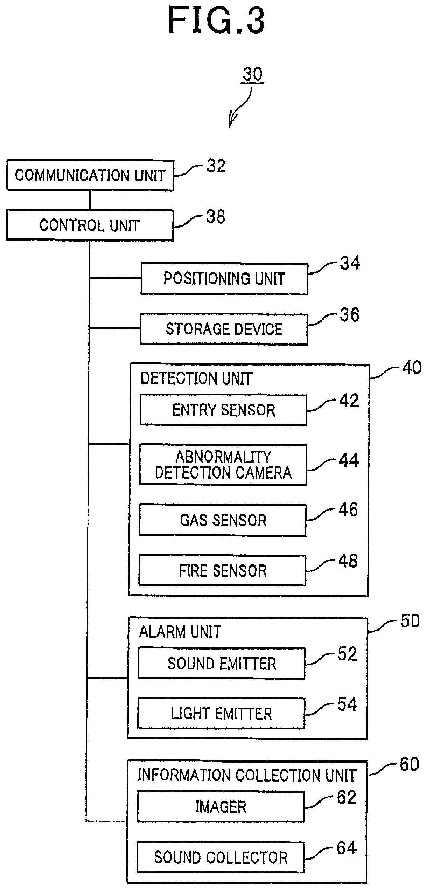

Fig. 3 schematically illustrates a security terminal 30. As shown in Fig. 3, each security terminal 30 includes a communication unit 32, positioning unit 34, storage unit 36, detection unit 40, alarm unit 50, information collection unit 60 and control unit 38.

The communication unit 32 performs communication with other terminals 10, 30 or 70. For example, the communication unit 32 may perform wireless or wired communication with the central terminal 10 or a different security terminal 30. Further, for example, the communication unit 32 may perform wireless communication with a mobile terminal 70.

The positioning unit 34 generates terminal position information that indicates the position where the corresponding security terminal 30 is set up. For example, the terminal position information includes latitude and longitude that indicate the position where the security terminal 30 is set up, and information that indicates the range of the corresponding monitoring area SA that is the target of monitoring of the security terminal 30.

The positioning unit 34 generates the terminal position information on the basis of a signal received from the positioning unit 3. Specifically, for example, the terminal position information may be generated using a known method which is based on signals received from a plurality of GPS satellites, or may be generated using a known method which is based on communication with a base station of cell-phones.

The detection unit 40 detects the conditions of the corresponding monitoring target or monitoring area SA. The detection unit 40 includes an entry sensor 42, an abnormality detection camera 44, a gas sensor 46 and a fire sensor 48.

Of these components, the entry sensor 42 senses entry of an object into a monitoring target or the monitoring area SA. For example, the entry sensor 42 is a known infrared sensor that includes a light emitter for emitting light in infrared range, and a light receiver for receiving light emitted from the light emitter. A plurality of infrared sensors are arranged surrounding the monitoring target or the monitoring area SA.

The abnormality detection camera 44 is an image pickup unit that picks up an image, covering from the monitoring target to the monitoring area SA. The detection unit 40 may include one or more cameras 44. The gas sensor 46 is a well-known sensor that senses gas leakage in the monitoring target. The fire sensor 48 is a well-known sensor that senses fire in the monitoring target. For example, the gas sensor 46 or the fire sensor 48 is set up in each room of a residential house as the monitoring target.

The information collection unit 60 collects information that indicates the conditions of the monitoring area SA (hereinafter, this information is referred to as "area condition information"). The information collection unit 60 includes an imager 62 and a sound collector 64.

The imager 62 is an image pickup device arranged in the monitoring area SA so as to pick up an image of at least a part of the monitoring area SA. The information collection unit 60 may include one or more imagers 62. The sound collector 64 is a microphone arranged in the monitoring area SA so as to collect sound in the monitoring area SA. The information collection unit 60 may include one or more sound collectors 64.

In the present embodiment, the detection results of the detection unit 40 and the area condition information collected by the information collection unit 60 are dealt as target monitored information.

The alarm unit 50 outputs an alarm in accordance with a control signal derived from the control unit 38. The alarm unit 50 includes a sound emitter 52 and a light emitter 54.

The sound emitter 52 is a loudspeaker that emits sound in accordance with a command from the control unit 38. The light emitter 54 is a light emitting device that emits light in accordance with a command from the control unit 38.

The control unit 38 is chiefly configured by a known microcomputer that includes ROM, RAM and CPU. The control unit 38 controls the units 32, 34 and the device 36 and the units 40, 50 and 60, which configure the security terminal 30.

The storage device 36 is a nonvolatile storage device configured in a readable/writable manner. The storage device 36 incorporates various programs that will be executed by the control unit 38.

The various programs include a program for the control unit 38 to perform a security terminal process for determining whether abnormality has occurred in the monitoring target and/or the monitoring area SA. The occurrence of abnormality is determined on the basis of the detection results obtained by the detection unit 40 and the area condition information collected by the information collection unit 60. Further, if abnormality has occurred as a result of the determination made in the security terminal process, abnormality notification that indicates the occurrence of abnormality is outputted while an alarm is outputted.

### <Mobile terminal>

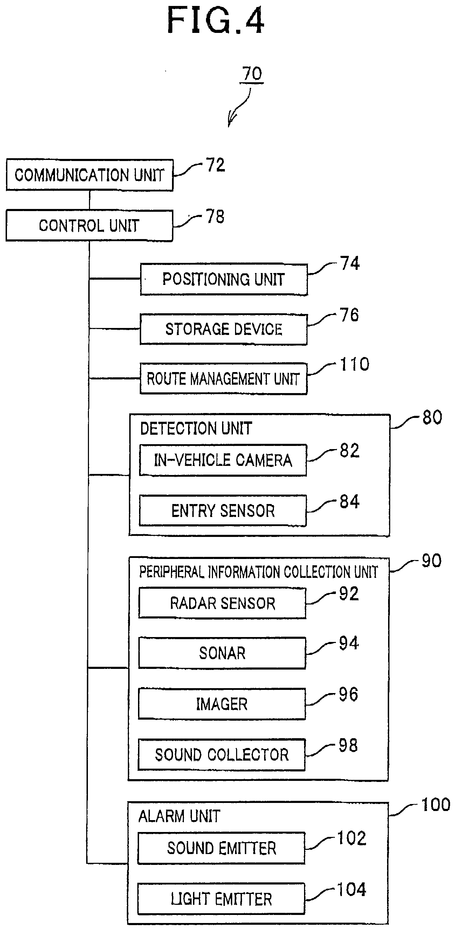

Fig. 4 illustrates a mobile terminal 70. As shown in Fig. 4, each mobile terminal 70 includes a communication unit 72, positioning unit 74, storage device 76, detection unit 80, peripheral information collection unit 90, route management (control) unit 110 and control unit 78.

The communication unit 72 performs wireless communication with other terminals 10, 30 or 70.

The positioning unit 74 generates mobile object position information that indicates the current position where the corresponding mobile terminal 70 is located. The positioning unit 74 generates the mobile object position information on the basis of a signal received from the positioning unit 3. Specifically, for example, the mobile object position information may be generated using a known method which is based on the signals received from a plurality of GPS satellites, or may be generated using a known method which is based on communication with a base station of cell-phones.

The detection unit 80 collects vehicle information that indicates the conditions of the vehicle equipped with the mobile terminal 70 (hereinafter, such a vehicle is referred to as "own vehicle"). The detection unit 80 includes an in-vehicle camera 82 and an entry sensor 84.

The in-vehicle camera 82 is an image pickup unit arranged for picking up an image around the own vehicle and an image of the interior of the own vehicle. The detection unit 80 may include one or more in-vehicle cameras 82. The entry sensor 84 senses entry of an object into the interior of the own vehicle. For example, the entry sensor 84 includes a vibration sensor that senses vibration applied to the own vehicle.

The peripheral information collection unit 90 collects information around the own vehicle equipped with the mobile terminal 70 (hereinafter, this information is referred to as "own-vehicle peripheral information"). The peripheral information collection unit 90 includes a radar sensor 92, sonar 94, imager 96 and sound collector 98.

The radar sensor 92 is a well-known sensor that senses an object that is present around the own vehicle as a result of transmitting/receiving a radio wave, a laser beam or the like as a search wave. The own vehicle may be provided with one or more radar sensors 92. The sonar 94 senses an object around the own vehicle as a result of transmitting/receiving a sound wave or an ultrasonic wave as a search wave. The own vehicle may be provided with one or more sonars 94.

The imager 96 is an image pickup device arranged to pick up an image around the own vehicle. The peripheral information collection unit 90 may include one or more imagers 96. The sound collector 98 is a microphone arranged in the own vehicle to collect sound around the own vehicle. The peripheral information collection unit 90 may include one or more sound collectors 98.

Specifically, the peripheral information collection unit 90 collects, as peripheral information, the detection results of the radar sensor 92 and the sonar 94, as well as the image picked up by the imager 96 and the results of sound collection performed by the sound collector 98.

The route management unit 110 sets a route that the own vehicle is going to travel and manages the set route. The route management unit 110 may be a known navigation system that guides the own vehicle to a destination according to the set route, or may be an automated cruise system that runs the own vehicle to a destination according to the set route.

The control unit 78 is chiefly configured by a well-known microcomputer that includes ROM, RAM and CPU. The control unit 78 controls the units 72, 74 110, the device 76 and the units 80 and 90, which configure the mobile terminal 70.

The storage unit 76 is a nonvolatile storage device configured in a readable/writable manner. The storage device 76 stores various programs that will be executed by the control unit 78.

The various programs include a program for the control unit 78 to perform a mobile terminal process for collecting behavior information and peripheral information and for confirming whether abnormality has occurred around the own vehicle. The occurrence of abnormality is confirmed on the basis of collected behavior information and peripheral information. In the mobile terminal process, if abnormality occurs, the control unit 78 outputs an abnormality notification to indicate the occurrence of abnormality and outputs an alarm. At the same time, the control unit 78 changes the route that has been set by the route management unit 110 to a new route that is set in conformity with the monitoring areas SA.

### <Security terminal process>

The security terminal process performed by the control unit 38 of the security terminal 30 is started upon input of a start command. The input of a start command here may, for example, be power-on of a switch.

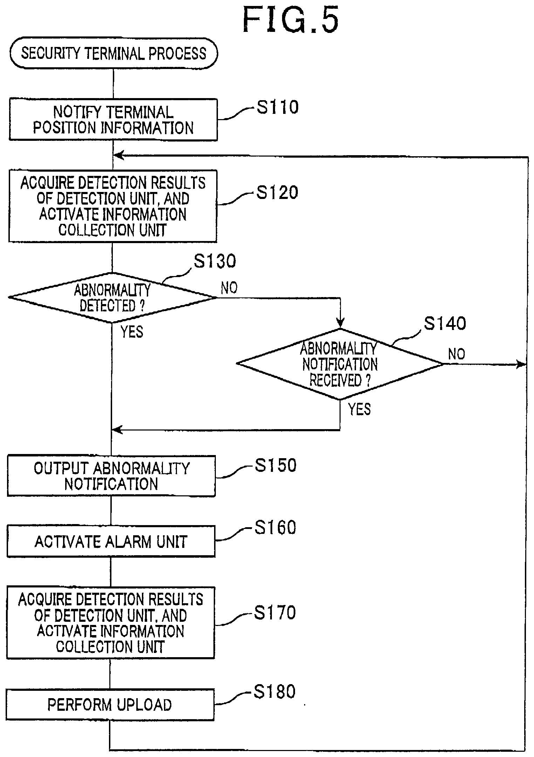

Fig. 5 is a flow diagram illustrating the security terminal process performed by each security terminal 30. As shown in Fig. 5, upon start of the security terminal process, the control unit 38 outputs, first, the terminal position information detected by the positioning unit 34 to the central terminal 10 (step S110). The terminal position information outputted in step S110 may include identification information that identifies the corresponding security terminal 30.

Then, the control unit 38 acquires the detection results of the detection unit 40 and activates the information collection unit 60 to acquire area condition information (step S120). Then, based on the detection results and the area condition information (i.e. target monitored information) acquired in step S120, the control unit 38 determines whether or not abnormality has occurred in the monitoring target and the monitoring area SA (i.e. the second target) of the security terminal 30 (step S130).

The requirements for determining the occurrence of abnormality in step S130 may be as follows. For example, the requirements may be that entry of an object into the monitoring target or the monitoring area SA is detected by the entry sensor 42, or that processing of an image picked up by the abnormality detection camera 44 shows entry of a suspicious individual into the monitoring target or the monitoring area SA. Further, the requirements may be that gas leakage in the monitoring target is detected by the gas sensor 46, or that fire in the monitoring target is detected by the fire sensor 48.

If abnormality has occurred in the monitoring target or the monitoring area SA as a result of the determination in step S130 (YES in step S130), the control unit 38 outputs a notification indicating the occurrence of abnormality (abnormality notification) to the central terminal 10, and transmits the abnormality notification through the communication unit 32 (step S150). The abnormality notification transmitted from the communication unit 32 is received by other terminals 30 and 70 that are present in the communication range of the communication unit 32.

Then, the control proceeds to step S160.

On the other hand, if abnormality has not occurred in the monitoring target or the monitoring area SA as a result of the determination in step S130 (NO in step S130), the control unit 38 determines whether or not an abnormality notification has been received from other terminal 10, 30 or 70 (step S140). If no abnormality notification has been received as a result of the determination in step S140 (NO at step S140), the control returns to step S120.

If an abnormality notification has been received as a result of the determination in step S140 (YES in step S140), the control unit 38 outputs the abnormality notification to the central terminal 10, while transmitting the abnormality notification through the communication unit 32 (step S150). Then, the control proceeds to step S160 where the alarm unit 50 is activated so that an alarm is outputted. In the present embodiment, the expression "the alarm unit 50 is activated so that an alarm is outputted" includes a meaning that sound is emitted from the sound emitter 52 or light is emitted from the light emitter 54 so that an alarm is given to an individual who is present in the monitoring area SA. Further, the expression "the alarm unit 50 is activated so that an alarm is outputted" also includes a meaning that sound is emitted from the sound emitter 52 or light is emitted from the light emitter 54 so that an individual who is present in the vicinity of the monitoring area SA is notified of the occurrence of abnormality, or that a notification on the occurrence of abnormality in the monitoring area SA is transmitted to a cell-phone terminal or the like carried by the owner of the monitoring target.

Then, the control unit 38 acquires the detection results of the detection unit 40 and activates the information collection unit 60 (step S170). After that, the control unit 38 acquires, as target monitored information, the area condition information acquired by activating the information collection unit 60, and the detection results of the detection unit 40. Further, the control unit 38 outputs, i.e. uploads, the acquired target monitored information to the central terminal 10 (step S180).

After that, the control returns to step S120.

Specifically, in the security terminal process, if abnormality has occurred as a result of the determination of the presence/absence of abnormality in the monitoring target and the monitoring area SA, the control unit 38 transmits an abnormality notification and uploads the target monitored information and the target information to the central terminal 10. Further, in the security terminal process, if an abnormality notification is received from other terminals 10, 30 or 70 that are present around the security terminal 30, the control unit 38 transmits the abnormality notification and uploads the target monitored information and the target information to the central terminal 10.

Specifically, the security terminal 30 performs security processing to function as the monitoring unit.

### <Mobile terminal process>

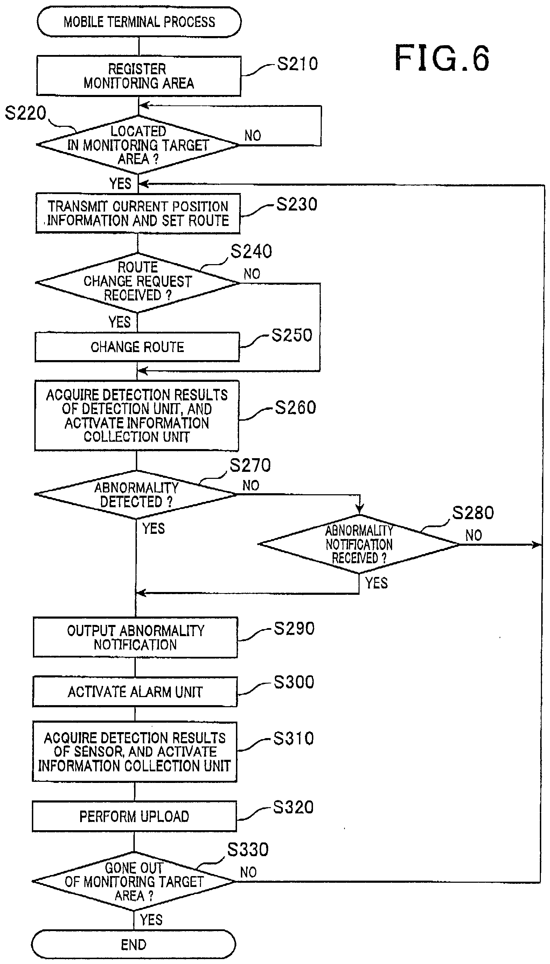

Hereinafter is described the mobile terminal process performed by the control unit 78 of the mobile terminal 70. Fig. 6 is a flow diagram illustrating the mobile terminal process. As shown in Fig. 6, the mobile terminal process is started upon input of a start command (e.g. input of an ignition signal). After the input of the start command, the mobile terminal process is repeatedly started at predetermined intervals.

As shown in Fig. 6, upon start of the mobile terminal process, the control unit 78 receives from the central terminal 10, first, signals indicating the monitoring areas SA and the monitoring target area AA, for which the terminals 30 and 70 perform monitoring, and registers the monitoring areas SA and the monitoring target area AA (step S210).

Then, the control unit 78 checks the current position detected by the positioning unit 74 against the monitoring target area AA to determine whether or not the own vehicle is located in the monitoring target area AA (step S220). If the own vehicle is not located in the monitoring target area AA as a result of the determination in step S220 (NO in step S220), the control unit 78 waits until the own vehicle enters the monitoring target area AA. Then, when the own vehicle has entered the monitoring target area AA (YES in step S220), the control unit 78 outputs the current position detected by the positioning unit 74 and the route that has been set by the route management unit 110 to the central terminal 10 (step S230).

Then, the control unit 78 determines whether or not a request for changing route (route change request) has been received (step S240). The route change request includes a changed route. The changed route is prepared by the central terminal 10 so that the own vehicle passes through monitoring-required area(s) of which conditions are required to be monitored in the monitoring target area AA and through which the own vehicle would not move in the set route.

If a route change request has been received as a result of the determination in step S240 (YES in step S240), the control unit 78 changes the route that has been set in the route management unit 110 to the changed route included in the route change request received in step S240 (step S250). Then, the control proceeds to step S260.

On the other hand, if no route change request has been received as a result of the determination in step S240 (NO in step S240), the control proceeds to step S260, skipping step S250. In other words, the route that has been set in the route management unit 110 is retained.

In step S260, the control unit 78 acquires vehicle information from the detection unit 80 and activates the peripheral information collection unit 90 to acquire own-vehicle peripheral information. Further, the control unit 78 determines whether or not abnormality has occurred in the own vehicle and/or in the vicinity of the own vehicle on the basis of the vehicle information and the own-vehicle peripheral information acquired in step S260 (step S270).

The requirements for determining the occurrence of abnormality in step S270 may be as follows. For example, the requirements may be that a suspicious individual is shown in an image picked up by the in-vehicle camera 82 and included in the vehicle information, or that the detection results of the entry sensor 84 indicates entry of an object into the interior of the own vehicle. Further, the requirements may be that a suspicious individual is present in the vicinity of the own vehicle as a result of the information collection performed by the peripheral information collection unit 90. Whether an individual in the image picked up by the in-vehicle camera 82 is suspicious is determined using identification information on individuals registered in advance. Specifically, the image of the individual picked up by the in-vehicle camera 82 is checked against the identification information to determine if there is a match. If there is no match, the individual may be determined to be suspicious.

If abnormality has occurred in the own vehicle and/or in the vicinity of the own vehicle as a result of the determination in step S270 (YES in step S270), the control unit 78 outputs an abnormality notification to the central terminal, while transmitting the abnormality notification through the communication unit 72 (step S280). The abnormality notification transmitted through the communication unit 72 is received by other terminals 30 and 70 that are located in the communication range of the communication unit 72. After that, the control proceeds to step S290.

On the other hand, if no abnormality has occurred in the own vehicle and/or in the vicinity of the own vehicle as a result of the determination in step S270 (NO in step S270), the control unit 78 determines whether or not an abnormality notification has been received from other terminals 10, 30 or 70 (step S280). If no abnormality notification has been received as a result of the determination in step S280 (NO in step S280), the control returns to step S230.

If an abnormality notification has been received as a result of the determination in step S280 (YES at step S280), the control proceeds to step S290.

In step S290, the control unit 78 outputs the abnormality notification to the central terminal 10, while transmitting the abnormality notification through the communication unit 72. Then, the control unit 78 activates the alarm unit 100 so that an alarm is outputted (step S300). In the present embodiment, the expression "activates the alarm unit 100 so that an alarm is outputted" includes emitting sound from the sound emitter 102 or emitting light from the light emitter 104 so that an alarm is given to an individual in the own vehicle or in the vicinity of the own vehicle.

Then, the control unit 78 acquires vehicle information from the detection unit 80, and activates the peripheral information collection unit 90 to acquire own-vehicle peripheral information (step S310). After that, the control unit 78 outputs, i.e. uploads, the vehicle information and the own-vehicle peripheral information acquired in step S310 to the central terminal 10 (step S320).

Further, the control unit 78 determines whether or not the own vehicle has gone out of the monitoring target area AA (step S330). If the own vehicle has not yet gone out of the monitoring target area AA as a result of this determination (NO in step S330), the control returns to step S230.

On the other hand, if the own vehicle has gone out of the monitoring target area AA as a result of the determination in step S330 (YES in step S330), the present mobile terminal process is halted until the next iteration.

Specifically, when a route change request is received from the central terminal 10 in the mobile terminal process, the route that has been set in the route administration unit 110 is changed to the changed route included in the route change request. Then, if the own vehicle is located in the monitoring target area AA, the control unit 78 activates the detection unit 80 and the peripheral information collection unit 90, acquires vehicle information and own-vehicle peripheral information, and determines whether or not abnormality has occurred in the own vehicle and/or in the vicinity of the own vehicle.

Specifically, the mobile terminal 70 performs the mobile terminal process to function as a condition monitoring apparatus.

### <Central process>

The central process performed by the control unit 18 of the central terminal 10 is started upon input of a start command. The start command here may, for example, be power-on of a switch.

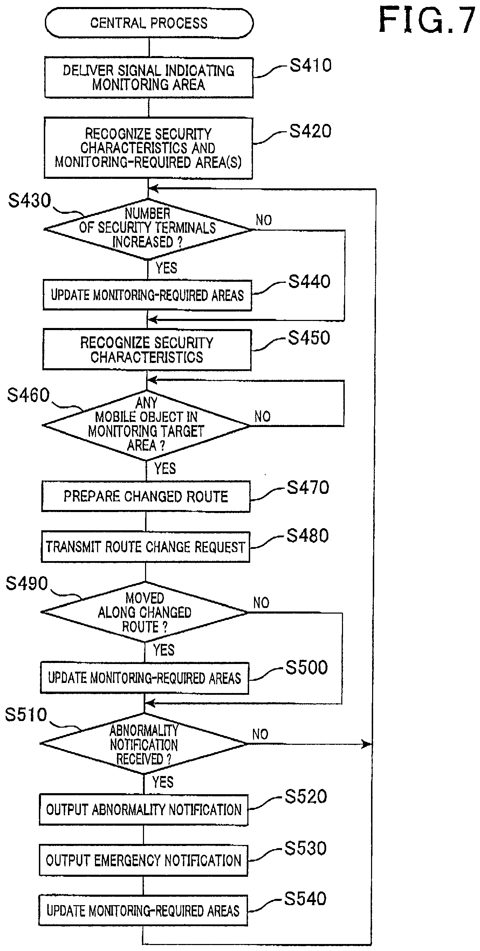

Fig. 7 is a flow diagram illustrating the central process performed by the central terminal 10. As shown in Fig. 7, upon start of the central process, the control unit 18 delivers, first, signals indicating the monitoring areas SA corresponding to the respective pieces of terminal position information received from the respective security terminals 30, as well as a signal indicating the monitoring target area AA, to the individual mobile terminals 70 (step S410).

Then, the control unit 18 recognizes security characteristics and monitoring-required area(s) (step S420). The security characteristics indicate a positional relationship between the monitoring areas SA. For example, in step S420, the control unit 18 uses, as a basis, the terminal position information received from the security terminals to plot on a map the positions where the security terminals 30 monitoring the targets are located, and the monitoring areas SA that are monitored by the respective security terminals 30. The control unit 18 recognizes, as security characteristics, the positional relationship between the monitoring areas SA plotted on the map. At the same time, the control unit 18 recognizes, as monitoring-required area(s), the monitoring area(s) SA having a density lower than a specified reference value in the monitoring target area AA. The expression "the monitoring area(s) SA having a density lower than a reference value" includes a meaning that there is a region where the monitoring areas SA are not present, or the number of the security terminals 30 is less than a reference value in a specified region.

Further, the control unit 18 determines whether or not there is an increase in the number of the security terminals 30 currently operating in the monitoring target area AA (step S430). If the number of the security terminals 30 has increased as a result of the determination in step S430 (YES in step S430), the control unit 18 specifies new monitoring-required area(s) on the basis of the terminal position information acquired from the newly increased security terminals 30 to thereby update the recognition of the monitoring-required areas (step S440). Then, the control proceeds to step S450.

On the other hand, if the number of the security terminals 30 has not increased as a result of the determination in step S430 (NO in step S430), the control unit 18 skips step S440 and proceeds to step S450. In step S430, the increase in the number of the security terminals 30 may be determined if new terminal position information has been received.

Then, in step S450, the control unit 18 updates the security characteristics on the basis of the terminal position information that has been received by then.

After that, the control unit 18 determines whether or not a mobile object equipped with a mobile terminal 70 (hereinafter, this object is referred to as "target mobile object") is present in the monitoring target area AA or in the vicinity of the monitoring target area AA (step S460). If no target mobile object is present in the monitoring target area AA or in the vicinity of the monitoring target area AA as a result of the determination in step S460 (NO in step S460), the control unit 18 waits. Then, when a target mobile object has entered the monitoring target area AA or the vicinity of the monitoring target area AA (YES in step S460), the control unit 18 prepares a changed route on the basis of the route and the destination that have been set in the route management unit 110 of the target mobile object (step S470).

Specifically, in step S470, if there are any monitoring-required areas, the control unit 18 determines whether or not the set route passes one of the monitoring-required areas. If the set route does not pass any one of the monitoring-required areas as a result of the determination, the control unit 18 determines whether or not a possible change of route would correspond to a change equal to or smaller than a predetermined threshold. In the possible change of route, the target mobile object would move from the current position to the destination, passing through the monitoring-required area(s). If the possible change is equal to or smaller than the predetermined threshold as a result of this determination, the control unit 18 prepares the changed route through which the target mobile object reaches the destination by way of the monitoring-required area(s).

After that, the control unit 18 transmits a route change request, which includes the changed route prepared in step S470, to the mobile terminal 70 installed in the target mobile object (step S480). Then, the control unit 18 determines whether or not the target mobile object has moved through the changed route before the expiration of a specified time interval since the transmission of the route change request including the changed route (step S490). In step S490, if the current position derived from the mobile terminal 70 installed in the target mobile object has transitioned to be along the changed route, the control unit 18 may determine that the target mobile object has moved through the changed route.

If the target mobile object has moved through the changed route as a result of the determination in step S490 (YES in step S490), the control unit 18 updates the monitoring-required areas so as to remove, from the monitoring-required areas, the area(s) residing along the route through which the target mobile object has moved (step S500). Then, the control proceeds to step S510. On the other hand, if the target mobile object has not moved through the changed route as a result of the determination in step S490 (NO in step S490), the control proceeds to step S510, skipping step S500.

In step S510, the control unit 18 determines whether or not an abnormality notification has been received. If no abnormality notification has been received as a result of the determination (NO in step S510), the control returns to step S430. On the other hand, if an abnormality notification has been received as a result of the determination in step S510 (YES in step S510), the control unit 18 transmits the received abnormal notification (step S520).

Further, the control unit 18 outputs an emergency notification indicating the occurrence of abnormality to an emergency notification reception organization (step S530). The emergency notification includes information indicating the location of the monitoring area SA where the abnormality has occurred. The emergency notification reception organization here refers to an organization that takes action against abnormalities to protect public peace and people's lives and health. The emergency notification reception organizations include police stations, fire stations and private security companies.

Then, the control unit 18 updates the monitoring-required areas so as to remove the site of the monitoring area SA included in the emergency notification from the monitoring-required area (step S540).

Then, control returns to step S430.

Specifically, the central process is performed to recognize security characteristics and monitoring-required area(s) on the basis of the information from the terminals 30. Further, in the central process, if any one of the mobile objects equipped with a mobile terminal 70 can move to the destination by way of the monitoring-required area(s), the control unit 18 prepares and sets a route (changed route) so that the mobile object passes through the monitoring-required area(s) before reaching the destination.

Specifically, the central terminal 10 performs the central process to function as the information processing apparatus.

### <Example of operation>

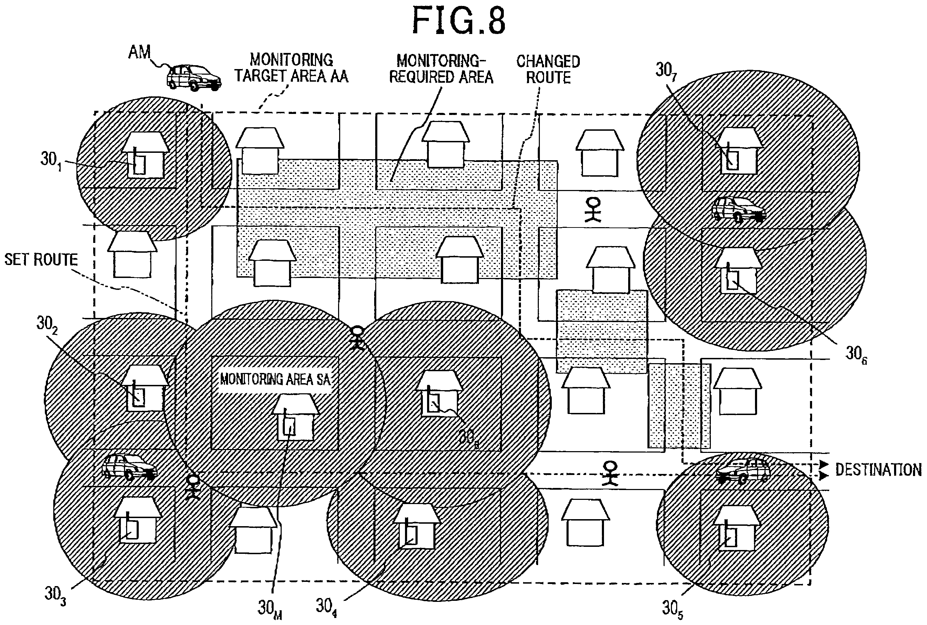

Referring to Fig. 8, an example of operation of the security system 1 is described.

Fig. 8 is illustrates an example of the operation. As shown in Fig. 8, a plurality of security terminals 30 are set up in the monitoring target area AA. Each security terminal 30 monitors the presence/absence of abnormality in the corresponding monitoring area SA and the corresponding monitoring target. However, in this example, some of the residential houses are not provided with the security terminal 30. Specifically, some parts of the monitoring target area AA are not monitored by the security terminals 30 as to the presence/absence of abnormality. In other words, the monitoring target area AA includes monitoring-required area(s).

In this situation, a car AM equipped with the mobile terminal 70 (i.e. target mobile object) moves to a destination passing through the monitoring target area AA. In this case, the central terminal 10 delivers a signal indicating the monitoring target area AA, which is taken care by the central terminal 10, to the mobile terminal 70 equipped in the car AM. Further, the central terminal 10 communicates with the security terminals 30 in operation in the monitoring target area AA to acquire their positions, and then specifies security characteristics and monitoring-required area(s).

On the other hand, upon entry of the car AM into the monitoring target area AA, the mobile terminal 70 in reception of the signal indicating the monitoring target area AA transmits the route that has been set in the route management unit 110 and the current position to the central terminal 10.

Then, the central terminal 10 prepares a changed route if monitoring-required area(s) are present in the monitoring target area AA and if the set route transmitted from the mobile terminal 70 does not pass through the monitoring-required area(s). The changed route would lead the car AM to its destination by way of the monitoring-required area(s). Then, the central terminal 10 transmits a route change request including the changed route to the mobile terminal 70 of the car AM.

The mobile terminal 70 in reception of the route change request changes the route that has been set in the route management unit 110 to the changed route included in the received route change request.

Then, in the course of the movement to the destination in accordance with the changed route, the mobile terminal 70 determines the presence/absence of abnormality in the monitoring-required area(s).

### [Advantageous effects of the embodiment]

As described above, the security system 1 can lead a target mobile object to a destination in accordance with a changed route. In the course of the movement to the destination, the security system 1 can determine whether the conditions of the monitoring-required area(s) are abnormal or not.

As a result, the security system 1 can detect whether any abnormality has occurred in the monitoring targets which are not provided with the security terminal 30.

Moreover, the security system 1 does not require increase of the number of set security terminals 30 in order to confirm the presence/absence of abnormality in the areas where the security terminal 30 is not set up. Accordingly, the security system 1 can suppress the cost increase as much as possible.

Further, in the occurrence of abnormality, the security system 1 transmits an emergency notification to an emergency notification reception organization. Accordingly, when abnormality occurs, the emergency notification reception organization can immediately take care of the abnormality. As a result, the security system 1 can minimize the expansion of the abnormality.

### [Other embodiments]

An embodiment of the present invention has so far been described. However, the present invention shall not be limited to the foregoing embodiment but may be implemented in various ways within a scope not departing from the spirit of the present invention.

For example, in the foregoing embodiment, a signal indicating the monitoring target area AA is delivered from the central terminal 10. Alternatively, information indicating the monitoring target area AA may be installed in advance in the mobile terminal 70. In this case, the information indicating the monitoring target area AA installed in the mobile terminal 70 may preferably the information indicating an area on which the presence/absence of abnormality should be determined.

Thus, in the event that no signal indicating the monitoring target area AA is delivered from the central terminal 10, the mobile terminal 70 can determine the presence/absence of abnormality in the own vehicle and/or in the vicinity of the own vehicle.

In the central process of the foregoing embodiment, the monitoring areas SA with a density lower than the specified reference value in the monitoring target area AA are recognized to be monitoring-required area(s). However, the requirements for recognizing the area as a monitoring-required area shall not be limited to this. For example, a monitoring-required area may be defined to be the target areas, i.e. divisions of the monitoring target area AA, with the number of the security terminals 30 and the mobile terminals 70 less than a specified value.

Further, each monitoring-required area may be monitored at a different level, depending on the security of the areas to be monitored therein. In this case, for example, the areas including a region with a higher density of mobile objects (e.g., a parking lot of a factory or that of a large-scale retail store) may be lower-security areas, and thus may be defined to be a monitoring-required area of high monitoring level (i.e. requiring high frequency of monitoring). Also, the areas having a higher incidence of crime may be lower-security areas, and thus may be defined to be a monitoring-required area of high monitoring level.

In step S530 of the central process, an emergency notification is outputted to an emergency notification reception organization. Alternatively, the destination of output of an emergency notification may be an emergency vehicle. The emergency vehicle here includes a police car, a fire truck, an ambulance or a vehicle of a private security company.

In this case, an emergency notification may be outputted to two or more types of emergency vehicles, or may be outputted to a plurality of vehicles of the same type. When an emergency notification is outputted to a plurality of vehicles, a route of movement may be specified such that a plurality of monitoring-required areas are covered by the plurality of vehicles in the course of their movement.

In the foregoing embodiment, a changed route is transmitted from the central terminal 10 to a mobile terminal 70. However, the information transmitted from the central terminal 10 to the mobile terminal 70 shall not be limited to this. For example, when a target mobile object equipped with the mobile terminal 70 is parked in a monitoring-required area, the information may specify the parking direction.

Thus, the target mobile object is parked being oriented to a direction in which the level of monitoring the conditions should be more enhanced. The reason why the parking direction is specified is that an in-vehicle camera or the like installed in a mobile object normally collects information on the conditions in a specific direction, and that, accordingly, the direction in which the monitoring level should be more enhanced is required to coincide with the specific direction.

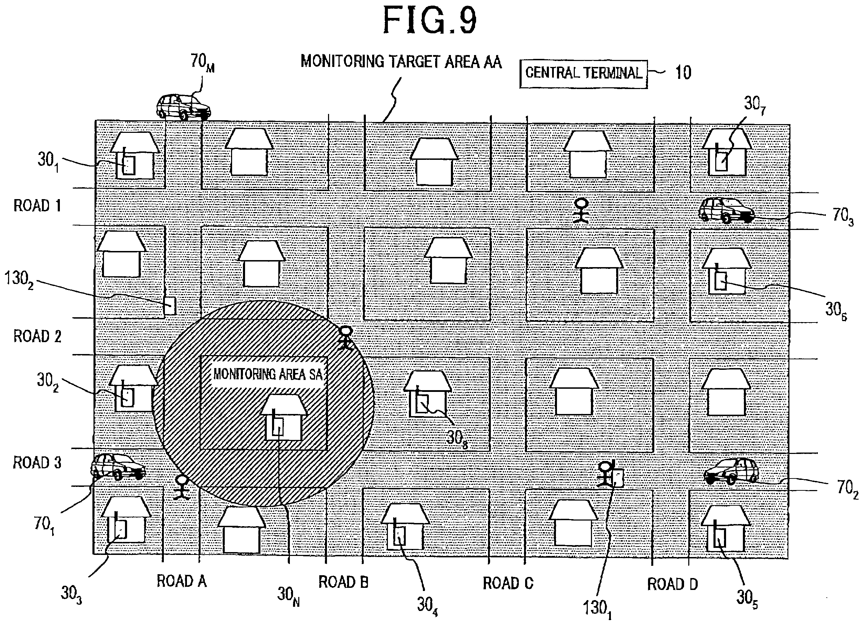

The security system 1 of the foregoing embodiment includes the security terminals 30, the mobile terminals 70 and the central terminal 10. Fig. 9 illustrates installation sites of terminals, according to a modification of the security system 1. As shown in Fig. 9, in addition to the terminals 30, 70 and 10, the security system 1 may include one or more auxiliary security terminals 130.

Each auxiliary security terminal 130 covers, as a monitoring target, a peripheral area around the site where the auxiliary security terminal 130 is present, and collects information on the conditions of this monitoring target (hereinafter, the information is referred to as "peripheral information"). Then, the auxiliary security terminal 130 determines the presence/absence of abnormality in the monitoring target on the basis of the collected peripheral information. The monitoring target of the auxiliary security terminal 130 includes the site where the person who carries the auxiliary security terminal 130 is present, and the site where the auxiliary security terminal 130 is set up.

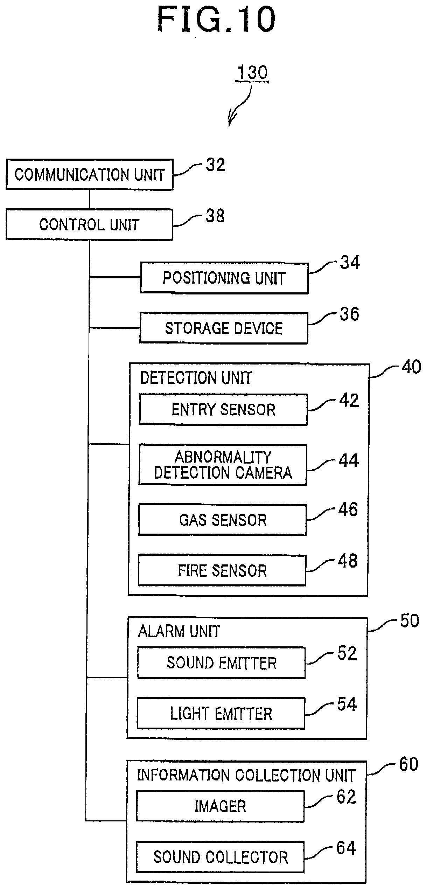

For example, the auxiliary security terminal 130 is formed into a size that a person can carry it. Fig. 10 illustrates the auxiliary security terminal 130 that configures the modification of the security system 1. As shown in Fig. 10 and similar to the security terminal 30, the auxiliary security terminal 130 includes the communication unit 32, positioning unit 34, storage device 36, detection unit 40, alarm unit 50, information collection unit 60 and control unit 38. Further, the auxiliary security terminal 130 may include the route management unit 110 (not shown in Fig. 10).

The auxiliary security terminal 130 may perform the security terminal process in a manner similar to the security terminal 30, or may perform the mobile terminal process, or may perform the both.

The security system 1 does not necessarily have to include the central terminal 10 or the security terminals 30. Specifically, the security system 1 may be configured by the mobile terminals 70. In this case, the individual mobile terminals 70 perform the central process in addition to the mobile terminal process.

In the foregoing embodiment, information communication is directly performed between each security terminal 30 and the central terminal 10, or between each mobile terminal 70 and the central terminal 10. Alternatively, the communication between each security terminal 30 and the central terminal 10, or between each mobile terminal 70 and the central terminal 10 may be performed in a state where a relay unit intervenes therebetween.

As far as the problems set forth above can be solved, a part of the configuration of the foregoing embodiment may be omitted. This omitted mode of the embodiment shall also be encompassed by the present invention. Further, the foregoing embodiment may appropriately be combined with a modification. A mode of such a combined configuration shall also be encompassed by the present invention. Further, any mode that can be conceived of in a range not departing from the essences of the present invention shall also be encompassed by the present invention.

Hereinafter, aspects of the above-described embodiments will be summarized.

As an aspect of the embodiment, a condition monitoring apparatus (70) includes a route control means (110), an information collection means (78, S260), an abnormality confirming means (78, S270, S280), a route acquisition means (78, S240), and a route change means (78, S250).

The route control means sets a set route which is to a destination and controls target equipment so that the target equipment moves in accordance with the set route. The information collection means repeatedly acquires information on results of monitoring which indicates a condition of a first target, which is a monitoring target. An abnormality confirming means determines whether or not the first target is in an abnormal state based on the information on results of monitoring acquired by the information collection means

In addition, the route acquisition means acquires a changed route. The changed route leads the target equipment to the destination by way of the monitoring-required area. The changed route is set, when the route acquisition means repeatedly acquires position information indicating a position of each monitoring terminal that monitors a condition of a second target, which is a monitoring target different from the first target, a condition is required to be monitored based on the position information in a monitoring target area larger than a monitoring area in which the second target is present, and an area in which the target equipment is not moved (monitoring-required area) in accordance with the set route is present.

If the changed route is acquired, the route change means sets the changed route as the set route.

According to the condition monitoring apparatus, the target equipment can be moved to the destination in accordance with the set route. During the movement to the destination, information on results of monitoring can be repeatedly acquired to determine whether or not a condition in the monitoring-required area is abnormal.

For example, according to the embodiment, the condition monitoring apparatus is mounted in a vehicle and the vehicle is moved along a changed route to confirm the presence/absence of abnormality in a monitoring-required area and, further, the presence/absence of abnormality in the second target residing in the monitoring-required area.

As described above, according to the embodiment, the occurrence of abnormality can be detected for a monitoring target where a terminal is not set up.

Moreover, according to the embodiment, the above advantageous effects can be obtained without the necessity of setting up a monitoring terminal. Thus, according to the embodiment, cost increase is suppressed as much as possible.

The embodiment may be achieved as a security system including one or more condition monitoring apparatuses and an information processing apparatus.

In this case, each condition monitoring apparatus may preferably be configured similar to the condition monitoring apparatus mentioned above, and the information processing apparatus may preferably include a monitoring-necessity confirming means and a changed-route preparing means.

The monitoring-necessity confirming means in the information processing apparatus acquires position information indicating the position of each monitoring terminal that monitors the conditions of the corresponding second target. In the same time, the monitoring-necessity confirming means confirms the presence/absence of monitoring-required area(s) on the basis of the acquired position information. As a result of the confirmation, if monitoring-required area(s) are present, the changed-route preparing means prepares and outputs a changed route for leading a vehicle equipped with the condition monitoring apparatus to a destination by way of the monitoring-required area(s).

The security system can move the vehicle to the destination in accordance with the changed route. Also, in the course of the movement to the destination, the security system can repeatedly acquire the information on the results of monitoring to determine whether or not the conditions in the monitoring-required area(s) are abnormal.

For example, the condition monitoring apparatus is mounted to a vehicle and the vehicle is moved along a changed route to determine the presence/absence of abnormality in monitoring-required area(s). Thus, the occurrence of abnormality can be confirmed for a monitoring target in which no terminal is set up.

The embodiment may be provided as a condition monitoring method, or as a program executed by a computer.

For example, when the embodiment is provided as a program, the program may be recorded on a computer-readable recording medium, such as DVD-ROM, CD-ROM or a hard disc, and the program may be loaded on a computer, as necessary, to start the program. Alternatively, the program may be acquired by a computer, as necessary, via a communication line and started. The computer can perform various processes according to the program to function as the condition monitoring apparatus.

## Claims

1. A security system (1), comprising the following parts (i). (ii), (iii) and (iv):
(i) a central terminal (10) comprising a communication unit (12), a storage device (16), and a control unit (18);
(ii) a positioning unit (3);
(iii) at least one security terminal (30-1, ..., 30-N) which has a communication unit (32), an information collection unit (60), a positioning unit (34) which generates position information where the security terminal (30) is set up and information that indicates the range of a monitoring area (SA), and a detection unit (40) which detects dangerous conditions of the monitoring area (SA), the monitoring area delimiting a peripheral area around a residential property, wherein the information collection unit (60) collects information that indicates the conditions of the monitoring area (SA); and
(iv) at least one mobile terminal (70) installed in a mobile object having:
a detection unit (80) which collects information that indicates the conditions of the mobile object;
a route control means (110) which sets a set route that the mobile object is going to travel, the route control means (110) being adapted to guide the mobile object to a destination according to the set route;
a communication unit (72) which transmits a specified current position and set route information indicating the set route set by the route control means (110) to the central terminal (10);
a peripheral information collection unit (90) which collects information indicating the conditions of the corresponding mobile object and the peripheral area of the mobile object; and
a control unit (78) which confirms the occurrence of an abnormality by determining whether or not the mobile object is in an abnormal state based on the information on results of monitoring acquired by the peripheral information collection unit (90);
wherein the central terminal (10) is adapted to determine the presence/absence of one or more monitoring-required areas, which are areas having a higher need of being monitored, on the basis of the position of the security terminals and the positional relationship of the corresponding monitoring areas,
wherein if the number of security terminals in a monitoring region is less than a reference number, the corresponding monitoring areas in the monitoring region are set as monitoring-required areas by the control unit of the central terminal (10),
wherein the control unit (18) of the central terminal (10) is further adapted to determine whether the set route of a mobile terminal (70) passes through the monitoring-required areas, wherein if the set route does not pass through any one of the monitoring-required areas, the control unit (18) of the central terminal (10) is adapted to determine whether a change route, for which the change is equal to or smaller than a threshold, is possible, so that according to the changed route the mobile object moves from the current position to the destination passing through the monitoring-required areas, and, if the change route is possible, the control unit (18) of the central terminal (10) is adapted to prepare and transmit a route change request to the mobile terminal (70) for guiding the corresponding mobile object to the destination according to the changed route, and
wherein the control unit (78) of the mobile terminal (70) is adapted to acquire the changed route received by the communication unit (72) of the mobile terminal (70), which was transmitted by the communication unit (12) of the central terminal (10), and to control the route control means (110) which sets the changed route as the set route when the changed route is acquired.

2. The security system according to claim 1, **characterized in that**
the mobile terminal (70) is one of the security terminals (30-1, ..., 30-N).

3. The security system according to claim 1, **characterized by** further comprising at least one security terminal (30) having:
a position transmission means which transmits information that indicates a position where the security terminal (30) is set up, as the position information;
a target information acquisition means which repeatedly acquires target monitoring information which indicates a condition of the monitoring area (SA); and
a monitoring means which monitors presence/absence of abnormality of the monitoring area (SA) based on the target monitoring information acquired by the target information acquisition means.

4. The security system according to claim 1, **characterized by** further comprising a notification means which performs notification to a predetermined organization.

## Patentansprüche

1. Sicherheitssystem (1), umfassend die folgenden Teile (i). (ii), (iii) und (iv):
(i) ein zentrales Terminal (10) mit einer Kommunikationseinheit (12), einer Speichervorrichtung (16) und einer Steuereinheit (18);
(ii) eine Positionierungseinheit (3);
(iii) zumindest ein Sicherheitsterminal (30-1, ... , 30-N), das eine Kommunikationseinheit (32), eine Informationssammeleinheit (60), eine Positionierungseinheit (34), die Positionsinformationen darüber, wo das Sicherheitsterminal (30) eingerichtet ist, und Informationen, die den Bereich eines Überwachungsbereichs (SA) anzeigen, erzeugt, und eine Erfassungseinheit (40), die gefährliche Gegebenheiten des Überwachungsbereichs (SA) erfasst, aufweist, wobei der Überwachungsbereich einen peripheren Bereich um ein Wohngrundstück herum begrenzt, wobei die Informationssammeleinheit (60) Informationen, die die Gegebenheiten des Überwachungsbereichs (SA) angeben, sammelt; und
(iv) zumindest ein mobiles Endgerät (70), das in einem mobilen Objekt installiert ist, mit
einer Erfassungseinheit (80), die Informationen sammelt, die die Gegebenheiten des mobilen Objekts anzeigen;
einer Routensteuervorrichtung (110), die eine eingestellte Route festlegt, die das mobile Objekt fahren wird, wobei die Routensteuervorrichtung (110) dazu eingerichtet ist, das mobile Objekt zu einem Ziel gemäß der eingestellten Route zu führen;
einer Kommunikationseinheit (72), die eine spezifizierte aktuelle Position und Einstellrouteninformationen, die die von der Routensteuervorrichtung (110) eingestellte Route angeben, an das zentrale Terminal (10) überträgt;
einer Peripherieinformationssammeleinheit (90), die Informationen sammelt, die die Gegebenheiten des entsprechenden mobilen Objekts und des peripheren Bereichs des mobilen Objekts angeben; und
einer Steuereinheit (78), die basierend auf den Informationen über Ergebnisse der Überwachung, die von der Peripherieinformationssammeleinheit (90) erfasst wurden, das Auftreten einer Abnormalität durch Bestimmen, ob sich das mobile Objekt in einem abnormalen Zustand befindet oder nicht, bestätigt;
wobei das zentrale Terminal (10) dazu eingerichtet ist, das Vorhandensein/Fehlen eines oder mehrerer überwachungsbedürftiger Bereiche, welche Bereiche sind, die einen höheren Bedarf haben, überwacht zu werden, auf der Grundlage der Position der Sicherheitsterminals und der positionellen Beziehung der entsprechenden Überwachungsbereiche zu bestimmen,
wobei dann, wenn die Anzahl von Sicherheitsterminals in einem Überwachungsbereich kleiner als eine Referenzanzahl ist, die entsprechenden Überwachungsbereiche in dem Überwachungsbereich von der Steuereinheit des zentralen Terminals (10) als überwachungsbedürftige Bereiche festgelegt werden,
wobei die Steuereinheit (18) des zentralen Terminals (10) ferner dazu eingerichtet ist, zu bestimmen, ob die eingestellte Route eines mobilen Endgeräts (70) durch die überwachungsbedürftigen Bereiche verläuft, wobei die Steuereinheit (18) des zentralen Terminals (10) dazu eingerichtet ist, dann, wenn die eingestellte Route durch keinen der überwachungsbedürftigen Bereiche verläuft, zu bestimmen, ob eine Änderungsroute, für die die Änderung gleich oder kleiner als ein Schwellenwert ist, möglich ist, so dass sich das mobile Objekt in Übereinstimmung mit der geänderten Route durch überwachungsbedürftigen Bereiche von der aktuellen Position zu dem Ziel bewegt, und, falls die Änderungsroute möglich ist, die Steuereinheit (18) des zentralen Terminals (10) dazu eingerichtet ist, eine Routenänderungsanforderung an das mobile Endgerät (70) vorzubereiten und zu übertragen, um das entsprechende mobile Objekt in Übereinstimmung mit der geänderten Route zu dem Ziel zu führen, und
wobei die Steuereinheit (78) des mobilen Endgeräts (70) dazu eingerichtet ist, die von der Kommunikationseinheit (72) des mobilen Endgeräts (70) empfangene geänderte Route, die von der Kommunikationseinheit (12) des zentralen Terminals (10) übertragen wurde, zu erfassen und die Routensteuervorrichtung (110) zu steuern, die die geänderte Route als die eingestellte Route festlegt, wenn die geänderte Route erfasst wird.

2. Sicherheitssystem nach Anspruch 1, **dadurch gekennzeichnet, dass** das mobile Endgerät (70) eines der Sicherheitsterminals (30-1, ... , 30-N) ist.

3. Sicherheitssystem nach Anspruch 1, **dadurch gekennzeichnet, dass** es ferner zumindest ein Sicherheitsterminal (30) umfasst mit
einem Positionsübertragungsmittel, das Informationen, die eine Position angeben, an der das Sicherheitsterminal (30) eingerichtet ist, als die Positionsinformationen überträgt;
einem Zielinformationserfassungsmittel, das wiederholt Zielüberwachungsinformationen erfasst, die eine Gegebenheit des Überwachungsbereichs (SA) angeben; und
einem Überwachungsmittel, das das Vorhandensein/Fehlen einer Abnormalität des Überwachungsbereichs (SA) auf der Grundlage der von der Zielinformationserfassungseinrichtung erfassten Zielüberwachungsinformationen überwacht.

4. Sicherheitssystem nach Anspruch 1, **dadurch gekennzeichnet, dass** es ferner ein Benachrichtigungsmittel umfasst, das eine Benachrichtigung an eine vorbestimmte Organisation durchführt.

## Revendications

1. Système de sécurité (1), comprenant les parties suivantes (i), (ii), (iii) et (iv) :
(i) un terminal central (10) comprenant une unité de communication (12), un dispositif de stockage (16), et une unité de commande (18) ;
(ii) une unité de positionnement (3) ;
(iii) au moins un terminal de sécurité (30-1, ..., 30-N) qui présente une unité de communication (32), une unité de collecte d'informations (60), une unité de positionnement (34) qui génère des informations de position concernant l'emplacement où le terminal de sécurité (30) est installé, et des informations qui indiquent la plage d'une zone de surveillance (SA), et une unité de détection (40) qui détecte des conditions dangereuses de la zone de surveillance (SA), la zone de surveillance délimitant une zone périphérique autour d'une propriété résidentielle, dans lequel l'unité de collecte d'informations (60) collecte des informations qui indiquent les conditions de la zone de surveillance (SA) ; et
(iv) au moins un terminal mobile (70) installé dans un objet mobile présentant :
une unité de détection (80) qui collecte des informations qui indiquent les conditions de l'objet mobile ;
un moyen de commande d'itinéraire (110) qui définit un itinéraire établi que l'objet mobile s'apprête à suivre, le moyen de commande d'itinéraire (110) étant apte à guider l'objet mobile vers une destination selon l'itinéraire établi ;
une unité de communication (72) qui transmet une position en cours spécifiée et des informations d'itinéraire établi indiquant l'itinéraire établi défini par le moyen de commande d'itinéraire (110), au terminal central (10) ;
une unité de collecte d'informations périphériques (90) qui collecte des informations indiquant les conditions de l'objet mobile correspondant et la zone périphérique de l'objet mobile ; et
une unité de commande (78) qui confirme l'occurrence d'une anomalie, en déterminant si l'objet mobile est dans un état anormal ou non, sur la base des informations sur des résultats d'une surveillance, acquises par l'unité de collecte d'informations périphériques (90) ;
dans lequel le terminal central (10) est apte à déterminer la présence/absence d'une ou plusieurs zones à surveiller, lesquelles correspondent à des zones nécessitant une surveillance accrue, sur la base de la position des terminaux de sécurité et de la relation de position des zones de surveillance correspondantes ;
dans lequel, si le nombre de terminaux de sécurité dans une région de surveillance est inférieur à un nombre de référence, les zones de surveillance correspondantes dans la région de surveillance sont définies comme des zones à surveiller par l'unité de commande du terminal central (10) ;
dans lequel l'unité de commande (18) du terminal central (10) est en outre apte à déterminer si l'itinéraire établi d'un terminal mobile (70) passe par les zones à surveiller, dans lequel, si l'itinéraire établi ne passe par aucune des zones à surveiller, l'unité de commande (18) du terminal central (10) est apte à déterminer si un itinéraire modifié, pour lequel la modification est égale ou inférieure à un seuil, est possible, de sorte que, selon l'itinéraire modifié, l'objet mobile se déplace, de la position en cours à la destination, en passant par les zones à surveiller, et, si l'itinéraire modifié est possible, l'unité de commande (18) du terminal central (10) est apte à préparer et transmettre une demande de modification d'itinéraire au terminal mobile (70) pour guider l'objet mobile correspondant vers la destination selon l'itinéraire modifié ; et
dans lequel l'unité de commande (78) du terminal mobile (70) est apte à acquérir l'itinéraire modifié reçu par l'unité de communication (72) du terminal mobile (70), qui a été transmis par l'unité de communication (12) du terminal central (10), et à commander le moyen de commande d'itinéraire (110) qui définit l'itinéraire modifié en tant que l'itinéraire établi lorsque l'itinéraire modifié est acquis.

2. Système de sécurité selon la revendication 1, **caractérisé en ce que** :
le terminal mobile (70) correspond à l'un des terminaux de sécurité (30-1, ..., 30-N).

3. Système de sécurité selon la revendication 1, **caractérisé en ce qu'**il comprend en outre au moins un terminal de sécurité (30) présentant :
un moyen de transmission de position qui transmet des informations indiquant une position où le terminal de sécurité (30) est installé, en tant que les informations de position ;
un moyen d'acquisition d'informations de cible, qui acquiert, de manière répétée, des informations de surveillance de cible, lesquelles indiquent une condition de la zone de surveillance (SA) ; et
un moyen de surveillance qui surveille la présence/absence d'une anomalie de la zone de surveillance (SA) sur la base des informations de surveillance de cible acquises par le moyen d'acquisition d'informations de cible.

4. Système de sécurité selon la revendication 1, **caractérisé en ce qu'**il comprend en outre un moyen de notification qui met en œuvre une notification à une organisation prédéterminée.
